# EUROPÄISCHE PATENTANMELDUNG

(11) **EP 4 752 707 A1**
(43) Veröffentlichungstag der Anmeldung: **03.06.2026**
(21) Anmeldenummer: 25213276.6
(22) Anmeldetag: 04.11.2025
(51) Int. Cl.: G06F 8/30, G06F 11/3604, G06N 20/00, G06F 8/75, G06F 8/77

(54) **COMPUTER-IMPLEMENTIERTES VERFAHREN UND TECHNISCHES SYSTEM ZUM GEWÄHRLEISTEN EINES QUALITÄTSMASSSTABS FÜR EINE MIT HILFE EINES GENERATIVEN KI-MODELLS GENERIERTEN CODESEQUENZ**

(30) Priorität: 28.11.2024 DE 102024211419
(71) Anmelder: Siemens Aktiengesellschaft, 80333 München (DE)
(72) Erfinder: Maier, Rupert, 91058 Erlangen (DE); Beyer, Dagmar, 81739 München (DE); Klepke, Steffen, 85748 Garching (DE)
(74) Vertreter: Siemens Patent Attorneys

(57) **Zusammenfassung**

Die Erfindung betrifft ein Computer-implementiertes Verfahren und technisches System zum Gewährleisten eines Qualitätsmaßstabs für eine mit Hilfe eines generativen Kl-Modells (LLM) generierten Codesequenz (CS) zur Erfüllung eines oder mehrerer Merkmale einer in einem Softwareentwicklungsprojektes zu entwickelnden Softwareanwendung, wobei der Qualitätsmaßstab durch einen Mindestgrad der Erfüllung dieses oder dieser Merkmale gegebenenfalls nach dessen/deren Klassifikation in dem Softwareentwicklungsprojekt vorgegeben ist. Das Verfahren umfasst folgende Schritte, welche insbesondere mit Hilfe zumindest eines Prozessors des technischen Systems (S) ausführbar sind:
a) Extrahieren, mittels eines Datenextraktionsadapter (EX) und/oder mittels eines Daten-Verdichters (V) des technischen Systems, dieses/dieser Merkmale aus Artefakten des Softwareentwicklungsprojektes, gegebenenfalls Klassifizieren des-/derselben und bei mehreren Merkmalen diese in Beziehung zueinander setzen, wobei der Qualitätsmaßstab durch einen Mindestgrad der Erfüllung dieses oder dieser Merkmale gegebenenfalls nach dessen/deren Bezug zueinander und gegebenenfalls nach dessen/deren Klassifikation in dem Softwareentwicklungsprojekt vorgegeben ist;
b) Bereitstellen, mittels eines vorgeschaltenen Processing Werkzeuges, von einem oder mehreren Aussortierbeispielen von Codesequenzen in einem Speicher (REP), die aus den in Schritt a) gewonnenen Informationen abgeleitet worden sind und den vorgegebenen Mindestgrad der Erfüllung unterschreiten und/oder die aus zuvor vom generativen KI-Modell generierten Codesequenzen, die aussortiert worden sind, hervorgehen;
c) Anreichern, mittels eines Codegenerator-Adapters (GEN) des technischen Systems, mindestens eines erfassten Prompts (P), welcher eine Generierung der Codesequenz durch das generative Kl-Modell initiiert, mit Kontext, welcher aus den einem oder mehreren extrahierten Merkmalen gebildet werden und mit den einen oder mehreren Aussortierbeispielen und anwenden des mindestens einen angereicherten Prompts auf das generativen Kl-Modell;
d) Erfassen, mittels einer am System angebundenen Entwicklungsumgebung (VSC), der mit Hilfe des angereicherten Prompts generierten Codesequenz und bewerten der generierten Codesequenz anhand des Qualitätsmaßstabs; und
e) Ausgeben der generierten Codesequenz, über eine Benutzerschnittstelle der Entwicklungsumgebung, wenn das Ergebnis der Bewertung aus Schritt d) positiv ausfällt, indem es den vorgegebenen Mindestgrad der Erfüllung erfüllt oder überschreitet.

## Beschreibung

Die Erfindung betrifft ein Computer-implementiertes Verfahren und technisches System zum Gewährleisten eines Qualitätsmaßstabs für eine mit Hilfe eines generativen Kl-Modells generierten Codesequenz.

Ein sogenanntes Large Language Model, LLM, ist ein Sprachmodell, das sich durch seine Fähigkeit auszeichnet, Sprache für allgemeine Zwecke zu verstehen und zu generieren. LLMs erwerben diese Fähigkeiten durch das Erlernen statistischer Beziehungen aus sehr großen Mengen von Textdokumenten während eines rechenintensiven selbstüberwachten und halbüberwachten Trainingsprozesses. LLMs sind sogenannte neuronale Netze, die einer Transformatorarchitektur folgen. Bemerkenswerte Beispiele für LLMs sind die GPT-Modelle von OpenAI (GPT, Generative Pretrained Transformer) z. B. GPT-3.5 und GPT-4, die in ChatGPT verwendet werden), PaLM von Google (verwendet in Bard) und LLaMA von Meta sowie BLOOM, Ernie 3.0 Titan und Claude 2 von Anthropic.

Die jüngsten Entwicklungen bei Large Language Models führen dazu, dass sie nicht nur in der Analyse von natürlicher Sprache verwendet werden, sondern weitere Einsatzbereiche wie z.B. Softwareentwicklung erschlossen werden sollen.

Trotz dem Aufkommen neuartiger No-Code- und Low-Code-Ansätze (Programmierung durch grafische Benutzeroberflächen) ist nach wie vor in vielen Situationen die konventionelle, textbasierte Software-Entwicklung erforderlich.

In einem solchen Fall wird die Softwareentwicklung nahezu ausschließlich von gut ausgebildeten Softwareexperten erledigt.

Seit einiger Zeit gibt es hierzu sogenannte Copilot-Erweiterungen für Softwareentwicklungsumgebungen (z.B. für Visual Studio Code oder Git). Diese sind in der Lage, unter Zuhilfenahme von "Large Language Modellen" Vorschläge zur Implementierung bestimmter Funktionalitäten zu generieren.

Die Angaben zur Programmiersprache und Einbettung der neuen Funktionalität in das bestehende Programm (Kontext) werden soweit möglich automatisch ermittelt und ergänzt. Die Interaktion mit solchen Copilot-Erweiterungen für Entwicklungsumgebungen erfolgt normalerweise in Form eines sogenannten "Prompts". Ein "Prompt" ist eine textuelle Beschreibung einer Aufgabe, die an ein geeignetes Large Language Model (LLM) zur Bearbeitung übergeben wird. Das entsprechende LLM generiert daraus eine Liste an Codesequenzen, die zu der vorgegebenen Aufgabe und dem direkt aus der Entwicklungsumgebung automatisch ermittelbaren Teil des Kontexts am besten passen.

Dies ist bereits eine sehr große Unterstützung der Software-Entwickler bzw. -Experten in ihrer Arbeit. Trotzdem besitzt diese Vorgehensweise kritische Schwachstellen:
1) Das Sammeln von aufgabenspezifischem (domänen- und projektspezifischen) Wissen, setzt oft ein hohes Maß an Fachwissen über den jeweiligen Bereich voraus. Um sie zu formalisieren und in das verwendete Machine Learning-Modell (ML-Modell) einzubetten braucht man hingegen ML-Experten. Die oben genannten Punkte setzen eine enge Zusammenarbeit zwischen ML-Experten und Domänenexperten für jede spezifische Anwendung voraus. Dieser Prozess ist sehr kostspielig und fehleranfällig bei falscher Kommunikation, was dazu führt, dass diese Ansätze nur für eine begrenzte Anzahl von Anwendungen praktikabel sind und deshalb kaum zum Einsatz kommen.
2) LLMs können nur das gelernte Wissen nutzen, um die jeweilige Codierungsaufgabe zu erledigen, bzw. zusätzliche Information die mittels Prompt als Input an das LLM übergeben wird. Fehlt das erforderliche Wissen in den Trainingsdaten, bzw im Prompt, generieren sie irrelevante, nutzlose Lösungsvorschläge für die gestellte Aufgabenstellung. In der Regel sind dies zwar syntaktisch richtige, aber für die Aufgabenstellung" unzutreffende oder sogar fehlerhafte Vorschläge" (Dieses Phänomen wird auch Halluzination (alternativ auch Konfabulation)) genannt. Insbesondere im industriellen Umfeld, in dem es meist um Softwarecodesequenzen zur Steuerung von Maschinen bzw. Robotern oder auch um das Messen von Steuerungsgrößen mit Geräten geht, ist der Aspekt einer zuverlässigen Anwendung, die aus den Codesequenzen generiert wurden, aus Sicherheitsgründen (Safety, z.B. Verhindern von Kollisionen des Roboters oder auch Temperatureinstellungen an Maschinen) besonders wichtig. Auch wenn die Codesequenz nicht reinen Quellcode, sondern Zeichencodes wie beispielsweise eine Bedienanleitung oder Fehlercodes betrifft, dürfen diese vom LLM auch nicht halluziniert worden sein. Dies kann ebenso ein Sicherheitsrisiko darstellen.
3) Oft generiert das LLM mehrere Lösungsvorschläge. In einem solchen Fall ist unklar, ob überhaupt einer der Vorschläge wirklich zur Aufgabenstellung passt und wenn ja welcher. Der Softwareentwickler ist daher gezwungen, die Vorschläge manuell zu bewerten oder auszuprobieren. Solange noch keiner der Vorschläge zur aktuellen Aufgabenstellung passt, müssen immer wieder neue, konkretere LLM-Prompts formuliert werden, um sich sukzessive an die erforderliche Codesequenz heranzutasten.

Zusammenfassend lässt sich also sagen, dass die aktuell praktizierte, LLM-basierte, automatisierte Codesequenz-Generierung in vielen Fällen hilft, trotzdem bleibt ein hoher manueller und damit zeitintensiver Nachbesserungsaufwand.

Die Nachbesserung besteht dann darin, einen exakteren, die Aufgabenstellung konkreter beschreibenden Prompt zu formulieren, um verbesserte Codesequenz-Vorschläge zu erhalten. Da das System bislang keine Fehler erkennen kann, ist hier der Software-Experte gefordert, die die jeweiligen Vorschläge auf Korrektheit/Passgenauigkeit zu prüfen.

Promptengineering (https://www.ibm.com/de-de/think/topics/prompt-engineering), bei dem Eingabedaten durch verschiedene Techniken und iterative Verfeinerung (nach)bearbeitet werden, erfordert technische Überlegungen, mit welcher der verschiedenen Techniken, Verzerrungen und Verwirrungen minimiert und damit genauere Antworten erzeugt werden können, die - wie oben dargestellt - im Kontext der Codegenerierung essenziell sind. Technische Überlegung beim Promptengineering sind vergleichbar mit den technischen Überlegungen bei herkömmlichen KI-Modellen, wie (z.B. mit oder ohne Feedbackschleife) und mit welchen Daten (z.B. gelabelt/markiert oder nicht gelabelt/markiert) dieses trainiert werden soll, um z.B. eine gezielte Steuerung eines Agenten (Fahrzeug, Roboter, Gerät, Maschine etc.) zu erreichen.

US 11 941 378 B1 beschreibt ein System und Verfahren, bei dem Produktionseinsichten - also Erkenntnisse - aus einer laufenden Produktionsumgebung gewonnen werden. Die Produktionseinsicht wird auf Grundlage von Daten bestimmt, die aus einer laufenden Produktionsumgebung stammen. Die Codebasis wird automatisch aktualisiert, um einen Text aufzunehmen, der die Produktionseinsicht in Bezug auf das Codeelement in menschenlesbarer Form vermittelt, wobei die Codebasis so aktualisiert wird, dass die Funktionalität des ausführbaren Programms nicht beeinträchtigt wird. Als Reaktion auf eine Benutzeranweisung wird ein generatives Kl-Modell aufgerufen, um ein Ergebnis zu erzeugen. Das generative Kl-Modell ist so konfiguriert, dass es die Codebasis oder einen Teil davon analysieren kann und in der Lage ist, die Produktionseinsicht zu nutzen.

Es ist Aufgabe der Erfindung, eine LLM-basierten Codesequenz-Generierung zu verbessern.

Diese Aufgabe wird durch die unabhängigen Ansprüche gelöst. Vorteilhafte Weiterbildungen sind Gegenstand der abhängigen Ansprüche.

Ein Aspekt der Erfindung ist ein computer-implementiertes Verfahren zum Gewährleisten eines Qualitätsmaßstabs für eine mit Hilfe eines generativen KI-Modells generierten Codesequenz zur Erfüllung eines oder mehrerer Merkmale einer in einem Softwareentwicklungsprojektes zu entwickelnden Softwareanwendung, wobei der Qualitätsmaßstab durch einen Mindestgrad der Erfüllung dieses oder dieser Merkmale gegebenenfalls nach dessen/deren Klassifikation in dem Softwareentwicklungsprojekt vorgegeben ist, umfassend folgende Schritte, welche insbesondere mit Hilfe zumindest eines Prozessors eines technischen Systems ausführbar sind:
a) Extrahieren , mittels eines Datenextraktionsadapter und/oder mittels eines Daten-Verdichters des technischen Systems, dieses/dieser Merkmale aus Artefakten des Softwareentwicklungsprojektes, gegebenenfalls Klassifizieren des-/derselben und bei mehreren Merkmalen diese in Beziehung zueinander setzen, wobei der Qualitätsmaßstab durch einen Mindestgrad der Erfüllung dieses oder dieser Merkmale gegebenenfalls nach dessen/deren Bezug zueinander und gegebenenfalls nach dessen/deren Klassifikation in dem Softwareentwicklungsprojekt vorgegeben ist;
b) Bereitstellen von einem oder mehreren Aussortierbeispielen von Codesequenzen in einem Speicher (Repository), die aus den in Schritt a) gewonnenen Informationen abgeleitet worden sind und den vorgegebenen Mindestgrad der Erfüllung unterschreiten und/oder die aus zuvor vom generativen Kl-Modell generierten Codesequenzen, die aussortiert worden sind, hervorgehen,
c) Anreichern, mittels eines Codegenerator-Adapters des technischen Systems, mindestens eines erfassten Prompts, welcher eine Generierung der Codesequenz durch das generative Kl-Modell initiiert, mit Kontext, welcher aus den einem oder mehreren extrahierten Merkmalen gebildet werden und mit den einen oder mehreren Aussortierbeispielen und anwenden des mindestens einen angereicherten Prompts auf das generativen KI-Modell,
d) Erfassen, mittels einer am System angebundenen Entwicklungsumgebung, der mit Hilfe des angereicherten Prompts generierten Codesequenz und bewerten der generierten Codesequenz anhand des Qualitätsmaßstabs;
e) Ausgeben der generierten Codesequenz über eine Benutzerschnittstelle der Entwicklungsumgebung, wenn das Ergebnis der Bewertung aus Schritt d) positiv ausfällt, indem es den vorgegebenen Mindestgrad der Erfüllung erfüllt oder überschreitet.

Die ausgegebene generierte Codesequenz kann zum Compilieren/Interpretieren und/oder zum Testen und ggf. Dokumentation verwendet werden. Die Codesequenz ist vorzugsweise für eine industrielle Anwendung geeignet. Insbesondere im industriellen Umfeld geht es meist um Softwarecodesequenzen zur Steuerung von Maschinen bzw. Robotern oder auch um das Messen von Steuerungsgrößen mit Geräten.

Die Merkmale aus Artefakten des Softwareentwicklungsprojekts können aus Verlinkungen von Daten aus Anforderungsbeschreibungen und/oder Architekturbeschreibung und/oder Quellcodedokumentation und/oder Testfallbeschreibungen und/oder Beschreibungen zum Ausrollen der aus der Softwareentwicklung resultierenden Anwendung zur Benutzung durch einen Benutzer extrahiert werden.

Ein Artefakt ist in der Regel ein "Nebenprodukt" der Softwareentwicklung, das dabei unterstützt, Architektur, Design und Funktion der Software zu beschreiben. Software-Artefakte werden in der Regel während des Softwareentwicklungsprozesses erstellt und können sich auf bestimmte Methoden oder Prozesse bei der Softwareentwicklung beziehen. Weiteres zu Artefakten ist beispielsweise in https://www.computerweekly.com/de/definition/Artefakt-Softwareentwicklung beschrieben.

Ein Qualitätsmaßstab ist beispielweise, nicht in die Aussortierbeispiele, die Negativ-Beispiele sein könne, zu laufen. Dann wäre der Grad der Erfüllung beispielsweise bei 100 %. Jedoch, wenn ein Aussortierbeispiel getroffen wird, diese aber "nur" ein ungenutztes bzw. unpassendes, schlechtes Beispiel, aber kein Negativ-Beispiel ist, dann könnte der Grad der Erfüllung bei 50% liegen. Dieser Grad wird im Softwareentwicklungsprojekt meist durch sogenannte Anforderungen (auch Requirements genannt) vorgegeben bzw. definiert. Diese Aussortierbeispiel können aus sogenannten Unittests von Codesequenzen oder auch aus Code-Reviews zur Qualitätssicherung hervorgehen. Auch kann die Akzeptanz durch Benutzerrückmeldung/-bewertung Aussortierbeispiele hervorbringen. Benutzer kann hierbei ein Endbenutzer oder Entwickler, Modellierer, Architekt bzw. Tester sein.

Eine Ausführungsform der Erfindung sieht vor, dass jede generierte Codesequenz zusammen mit dem zugehörigen Prompt, deren Bewertung ein negatives Ergebnis liefert, indem es den vorgegebenen Mindestgrad der Erfüllung unterschreitet, in ein Embedding überführt wird, das im Speicher abgelegt wird.

Der Begriff "Embedding" bezieht sich häufig auf die Idee, dass diskrete oder kategoriale Daten in einen Vektorraum "eingebettet" werden. Einbettungen werden zum maschinellen Lernen eingesetzt und ermöglichen den maschinellen Lernmodellen das Auffinden ähnlicher Objekte. Das Einbetten ermöglicht es, Wörter oder Wortketten in einen Raum von kontinuierlichen Zahlen zu überführen. Jedes Wort oder Wortkette wird in einen Vektor umgewandelt, der in diesem kontinuierlichen Raum liegt. Diese Vektoren repräsentieren die ursprünglichen Wörter und ermöglichen es, mathematische Operationen auf ihnen auszuführen (siehe https://fbeta.de/embedding-die-kunst-der-anreicherung/).

Im Prinzip kann der Prompt als das Dokument mit den Instruktionen betrachtet werden. Die technischen Fähigkeiten bzw. technische Limitierung der generativen KI (LLM) kann darin gesehen, werden, dass - wie oben erläutert- Standard-LLM zum Halluzinieren neigen und damit nicht nur unbefriedigende Ergebnisse, sondern auch mit Sicherheitsrisiko behaftende Vorschläge liefern können. Diese Vorschläge/Ergebnisse müssen dann nach dem Stand der Technik aufwendig nachgebessert werden. Erfindungsgemäß wird das bereits erläuterte Anreichern eines Prompts mit Kontext und Aussortier- bzw. Negativbeispielen verwendet.

Zum angereicherten Prompt kann nach einem ähnlichen Prompt mit zugehöriger Codesequenz im Speicher gesucht werden, und, wenn ein ähnlicher Prompt gefunden wurde, die Anwendung des angereicherten Prompts auf das generative KI-Modell verhindert wird. Ähnliche oder semantisch verwandte Wörter oder Wortketten haben in der Regel ähnliche Vektoren und liegen im Vektorraum nahe beieinander. Dies bedeutet, dass die Beziehungen zwischen den Wörtern oder Wortketten im Raum der kontinuierlichen Zahlen erfasst werden können.

Im Falle einer Bewertung des Ergebnisses aus o.g. Schritt d) als negativ können die o.g. Schritte c) bis e) wiederholt werden, bis das Ergebnis der Bewertung aus o.g. Schritt d) positiv ausfällt, indem es den vorgegebenen Mindestgrad der Erfüllung erfüllt oder überschreitet.

Ein oder mehrere Aussortierbeispiele können aus Benutzerinteraktionen, die eine Benutzerakzeptanz der angewandten Codesequenz widerspiegeln, oder aus einer Codesequenzüberprüfung und/oder Testergebnissen von Codesequenztests abgeleitet werden.

Die Codesequenz können auch ein oder mehrere Sequenzen von Codes umfassen, welche Zeichencodes und/oder Fehlercodes repräsentieren.

Ein Vorteil der Erfindung liegt in der Verbesserung der zur Code-Generierung eingesetzten Prompts. Damit bleiben fehlerhafte, unerwünschte, unzutreffende bzw. nicht passende Codesequenzen weitestgehend unberücksichtigt. So wird mit einer deutlich höheren Wahrscheinlichkeit eine Codesequenz erstellt, die für die Aufgabenstellung gut geeignet ist.

Dies reduziert den oben beschriebenen manuellen Aufwand bei der Aussortierung ungeeigneter Code-Sequenzen und der sequenziellen Annäherung an die Wunschlösung mittels manuellen Prompt-Ergänzung und Mehrfachaufruf der LLM zur Code-Generierung. Die hier eingesetzte erfindungsgemäße Vorgehensweise kann nicht nur zur Verbesserung des Anwendungsfalls "Codesequenz-Generierung" verwendet werden, sondern auch für viele andere Anwendungsfälle wie z.B. zur Fehlersuche, Dokumentation, zielgerichtetere Chats etc. hilfreich sein.

Ein weiterer Aspekt der Erfindung sieht ein technisches System z.B. ein Steuerungssystem in einer Industrieanlage oder auch ein Computer vor.

Die Komponenten des technischen Systems können Hardware-, Firmware- und/oder Softwarekomponenten repräsentieren.

Das technische System kann wie das oben beschriebene Verfahren entsprechend weitergebildet werden.

Ein weiterer Aspekt der Erfindung sieht ein Computerprogrammprodukt mit Mitteln zur Durchführung des Verfahrens, wenn das Computerprogrammprodukt auf dem genannten Steuergerät und/oder verteilt innerhalb der Anordnung zur Ausführung gebracht wird.

Die Vorrichtung sieht Mittel/Einheiten bzw. Module zur Durchführung des oben genannten Verfahrens vor, die jeweils hardwaremäßig und/oder firmwaremäßig und/oder softwaremäßig bzw. als Computerprogramm bzw. Computerprogrammprodukt ausgeprägt sein können.

Die oben beschriebenen Geräte/Vorrichtungen/Anordnungen können ebenfalls entsprechend dem Verfahren bzw. des Computerprogramms (-produkts) weitergebildet werden. Weitere Vorteile, Einzelheiten und Weiterbildungen der Erfindung ergeben sich aus der nachfolgenden Beschreibung von Ausführungsbeispielen in Verbindung mit den Zeichnungen.

Es zeigt:

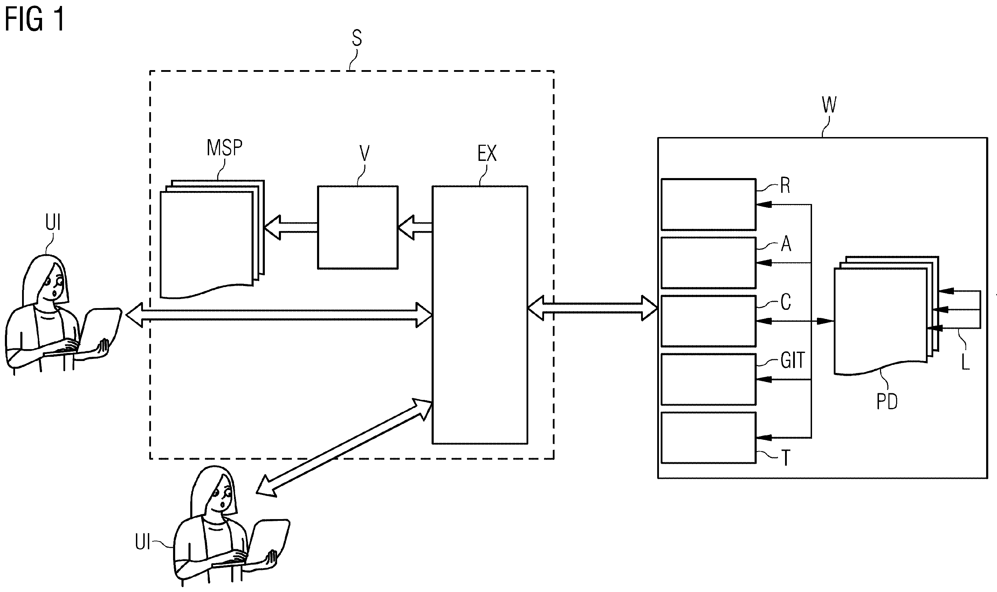

Die Figur 1 zeigt Module des erfinderischen technischen Systems bzw. Vorrichtung, die zur Erfassung der aktuellen Situation bzw. Kontext durch einen Daten-Extraktions-Adapter, Daten-Verdichter und Speicherung in einem Merkmalsspeicher,
   und

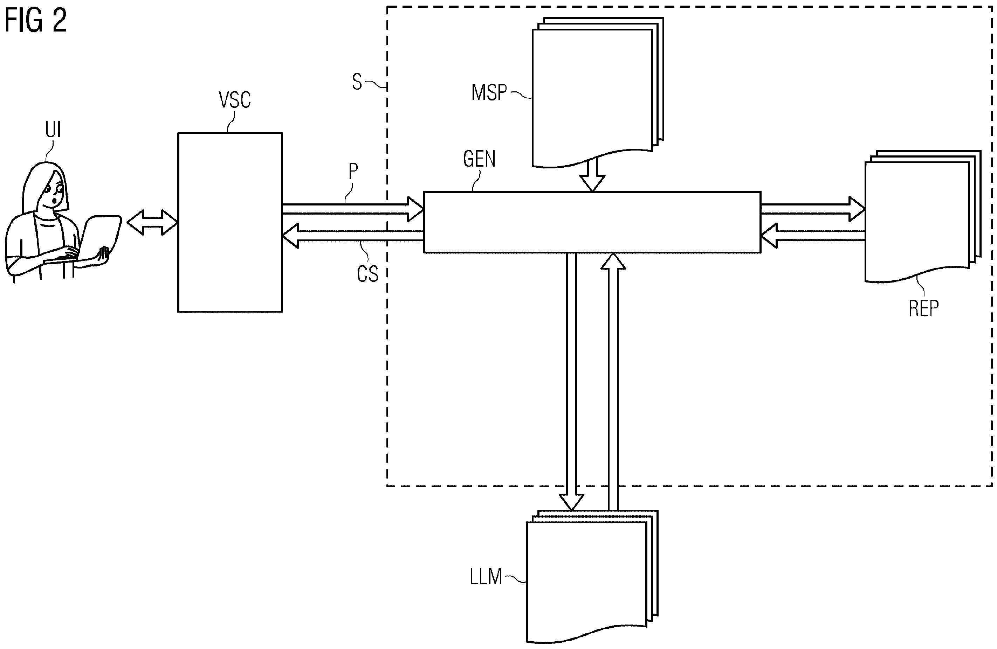

die Figur 2 ebenfalls Module des erfinderischen technischen Systems, bei dem Codesequenzen erfasst werden, die im jeweiligen Kontext nicht genutzt werden und damit Prompts verbessert werden können und deren Codegenerierungsergebnis verbessert werden können.

Die Erfindung stellt ein technisches System S zur automatisierten, dynamischen Anreicherung von Benutzeranfragen (Prompts) P an ein generativen Kl-Modells LLM, auch Large Language Modell LLM genannt, zur Generierung von Codesequenzen CS bereit. Bei der LLM-basierten Generierung von Codesequenzen zu einer vorzugebenen Aufgabenstellung können generell unpassende Vorschläge an Codesequenzen erzeugt werden, und dem Benutzer UI als Lösung präsentiert werden. Diese unpassenden Vorschläge sollen vermieden oder auf einfache Weise ausgefiltert/aussortiert werden.

Die Basisfunktionalität Codesequenzgenerierung wird dabei durch ein etabliertes LLM zur Codesequenzgenerierung bereitgestellt. Hierbei kann es sich um ein bereits etabliertes LLM (Beispiel: GPT 4.0) handeln, das in der Lage ist Codesequenzen zu generieren und umfangreiche Daten zusammenzufassen bzw. auf wesentliche Unterschiede zu reduzieren.

Der Benutzer UI interagiert mit dem LLM zur Codesequenzgenerierung mittels einer Benutzereingabe ("Original-Prompt"). Als Original-Prompt P wird in diesem Beispiel als Prompt bezeichnet, das der Entwickler zur Vergabe einer Programmieraufgabe eingegeben hat. Normalerweise wird dieses direkt an das LLM übergeben. Das LLM soll daraufhin Vorschläge für Codesequenzen generieren, welche zur aktuell anstehenden Software-Entwicklungsaufgabe passen. Das vorliegende, erfinderische technische System erfasst diese generierten Codesequenzen, die anhand eines vorgegebenen Qualitätsmaßstabs bewertet werden. Das technische System ergänzt/reichert jedoch das Original-Prompt an um situations- bzw. kontextspezifische Informationen und auch Informationen zu unpassenden Codesequenzen, um bessere Codesequenzen zu erhalten.

Diese Ergänzungen finden im Modul GEN "Code-Generation-Adapter" statt. Der Code-Generation-Adapter GEN erweitert die Funktionalität der eingesetzten Softwareentwicklungsumgebung VSC (z.B. VSC = Visual Studio Code). Er stellt eine Benutzerschnittstelle (UI-Interface) zur Verfügung, über die Entwickler eine Aufgabe zur Erstellung einer Codesequenz formulieren (Original-Prompt) und die Codesequenzgenerierung initiieren kann. Erfindungsgemäß wird der Codegenerator-Adapter die so gestellte Codesequenzgenerierungsaufgabe nicht direkt an das LLM ("Etabliertes LLM zur Code Generierung" LLM) sondern angereichert übergeben.

Anreicherungen können hierbei aus folgenden Quellen erfolgen:
1) aktueller Benutzerkontext, sowie Kontext der aktuellen Aufgabenstellung (der zu erzeugenden Codesequenz) basieren. Die Datenextraktion, Verdichtung und Bereitstellung erfolgt in Modulen zur "Merkmalsbereitstellung". Hierbei können Merkmale aus Artefakten des Softwareentwicklungsprojektes extrahiert (herausgefiltert), klassifiziert z.B. in Requirement, Architektur, Tests etc. und zueinander in Beziehung beispielsweise mit Hilfe eines Graphen gesetzt werden. In Softwareentwicklungsprojekten werden normalerweise Softwareentwicklungs- und -designwerkzeuge W verwendet. Die Projektdaten sind in einem Repository REP abgelenkt, die untereinander mit Links L in Beziehung stehen. Üblicherweise gibt es in Softwareentwicklungsprojekten Anforderungen R, Architekturdesign A, Testdaten T für den entwickelten Code C, dessen Codesequenzen in Bibliotheken GIT organisiert sein können.
2) Zudem wird normalerweise im Softwareentwicklungsprojekt der Qualitätsmaßstab, die eine Codesequenz zur Erfüllung dieser Merkmale erreichen soll, festgelegt bzw. vorgegeben.
3) Historie der bisher durch ein LLM-System erzeugten Codesequenzen (korrekt wie inkorrekt); insbesondere die inkorrekten Beispiele dienen hierbei als Negativbeispiele um die weiteren Ausgaben eines LLM-Systems zur Erzeugung von Codesequenzen zu verbessern. Die Erfassung und Bereitstellung von Negativbeispielen als Aussortierbeispiele erfolgen in Modul REP "Bereitstellung Negativbeispiele". Es wird dabei angenommen, dass die so gefundenen Codesequenzen wahrscheinlich auch im aktuellen Kontext nicht passen.

Daher wird das Original-Prompt um die Informationen zur akt. Situation/Kontext und zu wahrscheinlich nicht passenden Codesequenzen erweitert. Erst das so verbesserte Prompt wird an das etablierte LLM übergeben. Das LLM wird daraufhin Codesequenzen zurückliefern, die mit einer höheren Wahrscheinlichkeit zur aktuellen Aufgabenstellung des Entwicklers passen.

Module EX, V und MSP zur "Merkmalsbereitstellung":
Die aktuelle Situation in einem Softwareentwicklungsprojekt oder auch in einer Sitzung eines Entwicklers lässt sich über eine Vielzahl von Merkmalen charakterisieren.

Diese können einerseits durch Analyse vorhandener Projektdaten, aber auch durch Auswertung von Benutzerinteraktionen mit den im Entwicklungsprozess eingesetzten Werkzeuge W ermittelt werden.
1) Analyse vorhandener Projektdaten:
   Bei Softwareentwicklungsprojekten existieren in der Regel zu jedem benötigten Merkmal weitere Daten (Beispiele sind: Definitionen, Anforderungen, die über das betroffene Merkmal erfüllt werden, Architekturentscheidungen, wie das Merkmal zu implementieren ist oder Testbeispiel-Beschreibungen aus denen hervorgeht, unter welchen Umständen ein Merkmal korrekt und fehlerfrei arbeitet). In der Regel sind diese Zusatzdaten mit dem zu programmierenden Merkmal verlinkt. Diese Verlinkung kann genutzt werden, um auf die entsprechenden Daten zugreifen und die jeweilige Situation/Kontext besser beschreiben zu können.
   Beispielsweise können Teile der Aufgabenbeschreibung und auch die Klassifizierung einer Codesequenz aus der Quellcode-Dokumentation und/oder aus den mit dem jeweiligen Programmcode verlinkten Merkmal-, Anforderungs- und Testbeispiel-Beschreibungen extrahiert werden.
2) Auswertung von Benutzerinteraktionen und Meldungen der genutzten Werkzeuge:
   Die von den involvierten personellen Ressourcen bzw. Benutzer (Entwickler, Modellierer, Architekten, Tester, etc.) im Design- und Entwicklungsprozess einer Softwareanwendung eingegebenen Daten, ausgeführte Benutzer-Interaktionen und die daraufhin automatisch generierten Meldungen der Softwareentwicklungs- und -designwerkzeuge W (Fehlermeldungen, ...) werden erfasst und ausgewertet. Ein Softwareentwicklungsprojekt besteht i.d.R. im Minimum aus Phasen wie "Requirement Generierung", "Architektur-Erstellung", "Programmierung einzelner Features", "Test der Features/Komponenten" und "Ausrollen zur Nutzung durch den Benutzer". Oft sind die einzelnen Artefakte des Softwareentwicklungsprojekts mit den zugehörigen Artefakten der anderen Phasen miteinander verbunden (verlinkt).
   Diese Sachverhalte können beispielsweise auf folgende Weise genutzt werden:
      - Aus Benutzerinteraktionen können Merkmale einzelner Aufgabenstellungen extrahiert werden.
      - Fehlerhafte Codesequenzen können über Meldungen der involvierten Werkzeuge (z.B. Compiler) aber auch über erstellte Test-Protokolle (Logs) identifiziert werden.
      - Über Verlinkungen können zusammengehörende Daten erkannt werden.

Um diese Benutzerinteraktionen in den involvierten Werkzeugen erfassen zu können, ist jeweils ein werkzeugspezifischer Adapter erforderlich.

Die "Merkmalsbereitstellung" besteht im Wesentlichen aus drei Modulen:
Datenextraktionsadapter bzw. Data-Extraktion-Adapter EX:
An der Entwicklung eines Softwareprojektes sind in der Regel mehrere verschiedene Experten bzw. Benutzer beteiligt, um die erforderlichen Arbeiten (Beispiele: Requirement-Engineering, Architekturdesign, Softwareentwicklung, Test, Deployment (Ausrollen), ...) auszuführen. Mit Hilfe spezialisierter Werkzeuge erzeugen diese Experten projekt- und situationsspezifische Daten, die Wissen enthalten, die für die Generierung passender Codesequenzen von Bedeutung sind. Daher werden diese Daten durch "Mithören" der Benutzerinteraktionen bzw. durch Extraktion relevanter Informationen zusammengetragen. Dies erledigen entsprechende, werkzeugspezifische Data-Extraktion-Adapter.

Daten-Verdichter V:
Die von den verschiedenen Data-Extraktion-Adaptern zusammengetragenen Daten müssen auf eine einheitliche Weise kompaktiert und standardisiert formatiert werden. Hierbei werden die einzelnen Artefakte die aus der Extraktion gewonnen werden, nach Typen kategorisiert/klassifiziert ("Requirement", "Architektur", ...), und miteinander in Bezug gestellt (z.B. durch Links z.B. in einer geeigneten Graphdarstellung). Durch eine Vorverarbeitung mittels eines geeigneten Processing Werkzeugs, z.B. LLM, kann der Inhalt der Artefakte noch weiter verdichtet werden (Summarization). Die verdichteten Daten werden dann mittels geeigneter Preprocessing-Pipelines schließlich im Merkmals-Speicher MSP zur späteren Verwendung abgelegt.

Merkmals-Speicher MSP zur aktuellen Situation (Kontext), Domäne und dem aktuellen Projekt (alle drei zusammen als erweiterter Kontext):
Speicher, in dem aktuelle Situationsdaten vorgehalten werden, die von den Data-Extraktion-Adaptern zusammengetragenen und anschließend vom Daten-Verdichter zusammengefasst und aufbereitet wurden. Sie werden später für die genauere Spezifizierung der jeweiligen Programmier-Aufgabenstellung (Prompts) verwendet. Hierbei werden geeignete Embeddings (mit Hilfe eines LLMs für textuelle Artefakte oder Graphembeddings zur Verdichtung von Graphstrukturen) für die Artefakte und ihre Verknüpfungen (Links) in einer Preprocessing Pipeline erzeugt. Die Bereitstellung dieser Embeddings kann in einer Vektordatenbank erfolgen. Ein erzeugtes Embedding bezieht sich hierbei auf eine spezifische Situation.

Im Repository REP werden Aussortierbeispiele, insbesondere Negativbeispiele bereitgestellt:
Hierbei werden Codesequenzen ermittelt, die in bestimmten Situationen nicht genutzt wurden.

Sobald Entwickler in Dialog mit einem System zur Codegenerierung treten, können Feedback Mechanismen Indikatoren für die Korrektheit und Nützlichkeit der Ausgaben (also der generierten Codesequenzen geben).

Sofern Entwickler versuchen, sukzessive über wiederholte Prompt-Generierung und LLM-Aufrufe die passende Code-Sequenz zu erhalten, können die Zwischenschritte (also alle Vorschläge, die noch nicht das gewünschte Ergebnis enthielten und damit nicht dem vorgegebenen Qualitätsmaßstab erreichen) erfasst werden. Diese Ausgaben der Codegenerierung, die durch negative Rückmeldung (Feedback) vom Benutzer klassifiziert werden, werden als unbrauchbare Codesequenzen gespeichert. Sie geben eine Indikation darauf, dass die Benutzereingabe nicht ausreichend die Generierungsaufgabe spezifizieren konnte.

Unbrauchbare Codesequenzen sind entweder generell fehlerhafte Codesequenzen oder auch Codesequenzen, die zwar unter bestimmten Umständen die gestellte Aufgabe lösen würden, doch passen sie nicht (optimal) zu dem beabsichtigten Einsatzfall bzw. Kontext. Im übergeordneten Softwareentwicklungsprojekt existieren Randbedingungen (z.B. Programmiersprache, Zielsystem, verwendete Basis-Bibliotheken, etc.), zu denen die generierten Codesequenzen passen müssen.

Die nicht passenden Codesequenzen werden als nicht brauchbar gekennzeichnet. Aus dem nachfolgenden Prompt-Abfragen können zusätzlich Informationen extrahiert werden, warum die jeweilige Codesequenz nicht passte. So können fehlerhafte bzw. unzutreffende Codesequenz zusammen mit Informationen, warum die Codesequenz zu einer bestimmten Aufgabe nicht passt (Klassifizierung), den Merkmalsdaten zur aktuellen Situation und dem Originalprompt in das Repository REP "Ungenutzte Codesequenzen" aufgenommen werden. Hier werden vorgeschlagene aber doch nicht genutzt Codesequenzen inklusive des Original-Prompts und den Merkmalen zur aktuellen Situation abgelegt. Ziel dabei ist, diese Daten in einer späteren Situation zu nutzen, um das Original-Prompt automatisiert zu verbessern und so bessere, treffendere Codesequenz-Vorschläge zu erhalten.

Zur Auffindung von Negativbeispielen werden die Merkmalsdaten des aktuellen Benutzerkontext, sowie das Original-Prompt als Suchanfrage auf das Repository verwendet. Diese Benutzeranfrage wird mittels eines geeigneten Verfahrens (z.B. ein LLM) in ein Embedding überführt, das eine numerische Repräsentation der Anfrage darstellt. Dieses Embedding dient als Suchanfrage an ein Repository REP, auch Wissensdatenbank genannt, die z.B. Vektordatenbank ausgestaltet sein kann. Das Resultat der Suche ergibt sich aus einer Liste von Negativbeispielen (also generierte Codesequenzen, die von Benutzer mit negativem Feedback bewertet wurden, bzw. durch ein nachfolgendes Prompt überarbeitet wurden). Die Bewertung erfolgt in der Regel auf der Basis der vorgegebenen Qualitätsmaßstäbe.

Diese Funktion einer Wissensdatenbank "Ungenutzte Codesequenzen" kann auf verschiedenen Wegen beispielsweise als Triple-Store, der sukzessive erweitert wird, umgesetzt werden oder als separates LLM, das durch Finetuning sukzessive verbessert wird, oder indem das betroffene Wissen dem "Etablierten LLM zur Code Generierung" hinzugefügt wird (z.B. durch Finetuning).

Prompt-Ergänzungen/-Anreicherung zur verbesserten Codesequenz-Generierung:
Ziel ist es, die Korrektheit sowie Treffergenauigkeit und damit den Grad der Erfüllung des jeweils vorgegebenen Qualitätsmaßstabs von dem LLM zurückgegeben Codesequenzen zu erhöhen.

Es wird die angestrebte Verbesserung erreicht, indem es die verwendeten Prompts automatisch um die folgenden Daten ergänzt:
- Verwendung zusätzlicher Daten, welche die aktuelle Situation und deren Bedürfnisse beschreiben. Diese können direkt aus dem Merkmalsspeicher MSP entnommen werden.
- Auflistung von Codesequenzen als Aussortierbeispiele, die für die aktuelle Aufgabenstellung nicht geeignet sind und daher nicht als Vorschlag zurückgegeben werden sollen. Zu diesem Zweck wird das Repository REP mit "Ungenutzte Codesequenzen" nach Codesequenzen abgefragt, die in einer ähnlichen Situation und bei einem ähnlichen Originalprompt nicht verwendet wurden.

Die entsprechende Aufbereitung des Originalprompts übernimmt der Codegenerator-Adapter GEN, der in die Entwicklungsumgebung VSC integriert sein kann.

Die generierten Codesequenzen, die den Qualitätsmaßstab zu einem Mindestgrad erfüllen und somit "passend" sind, können zum Compilieren/Interpretieren und/oder zum Testen und ggf. Dokumentation oder zu einer sonstigen Weiterverarbeitung verwendet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Computer-implementiertes Verfahren zum Gewährleisten eines Qualitätsmaßstabs für eine mit Hilfe eines generativen Kl-Modells (LLM) generierten Codesequenz (CS) zur Erfüllung eines oder mehrerer Merkmale einer in einem Softwareentwicklungsprojektes zu entwickelnden Softwareanwendung, wobei der Qualitätsmaßstab durch einen Mindestgrad der Erfüllung dieses oder dieser Merkmale gegebenenfalls nach dessen/deren Klassifikation in dem Softwareentwicklungsprojekt vorgegeben ist, umfassend folgende Schritte, welche insbesondere mit Hilfe zumindest eines Prozessors eines technischen Systems (S) ausführbar sind:
a) Extrahieren, mittels eines Datenextraktionsadapter (EX) und/oder mittels eines Daten-Verdichters (V) des technischen Systems, dieses/dieser Merkmale aus Artefakten des Softwareentwicklungsprojektes, gegebenenfalls Klassifizieren des-/derselben und bei mehreren Merkmalen diese in Beziehung zueinander setzen, wobei der Qualitätsmaßstab durch einen Mindestgrad der Erfüllung dieses oder dieser Merkmale gegebenenfalls nach dessen/deren Bezug zueinander und gegebenenfalls nach dessen/deren Klassifikation in dem Softwareentwicklungsprojekt vorgegeben ist;
b) Bereitstellen, mittels eines vorgeschaltenen Processing Werkzeuges, von einem oder mehreren Aussortierbeispielen von Codesequenzen in einem Speicher (REP), die aus den in Schritt a) gewonnenen Informationen abgeleitet worden sind und den vorgegebenen Mindestgrad der Erfüllung unterschreiten und/oder die aus zuvor vom generativen KI-Modell generierten Codesequenzen, die aussortiert worden sind, hervorgehen;
c) Anreichern, mittels eines Codegenerator-Adapters (GEN) des technischen Systems, mindestens eines erfassten Prompts (P), welcher eine Generierung der Codesequenz durch das generative Kl-Modell initiiert, mit Kontext, welcher aus den einem oder mehreren extrahierten Merkmalen gebildet werden und mit den einen oder mehreren Aussortierbeispielen und anwenden des mindestens einen angereicherten Prompts auf das generativen Kl-Modell;
d) Erfassen, mittels einer am System angebundenen Entwicklungsumgebung (VSC), der mit Hilfe des angereicherten Prompts generierten Codesequenz und bewerten der generierten Codesequenz anhand des Qualitätsmaßstabs; und
e) Ausgeben der generierten Codesequenz, über eine Benutzerschnittstelle der Entwicklungsumgebung, wenn das Ergebnis der Bewertung aus Schritt d) positiv ausfällt, indem es den vorgegebenen Mindestgrad der Erfüllung erfüllt oder überschreitet.

2. Verfahren nach dem vorhergehenden Anspruch, **dadurch gekennzeichnet, dass** jede generierte Codesequenz zusammen mit dem zugehörigen Prompt, deren Bewertung ein negatives Ergebnis liefert, indem es den vorgegebenen Mindestgrad der Erfüllung unterschreitet, in ein Embedding überführt wird, das im Speicher abgelegt wird.

3. Verfahren nach einem der vorhergehenden Ansprüche **dadurch gekennzeichnet, dass** zum angereicherten Prompt nach einem ähnlichen Prompt mit zugehöriger Codesequenz im Speicher gesucht wird, und, wenn ein ähnlicher Prompt gefunden wurde, die Anwendung des angereicherten Prompts auf das generative KI-Modell verhindert wird.

4. Verfahren nach einem der vorhergehenden Ansprüche, **dadurch gekennzeichnet, dass** im Falle einer Bewertung des Ergebnisses aus Schritt d) als negativ die Schritte c) bis e) aus Anspruch 1 wiederholt werden, bis das Ergebnis der Bewertung aus Schritt d) positiv ausfällt, indem es den vorgegebenen Mindestgrad der Erfüllung erfüllt oder überschreitet.

5. Verfahren nach einem der vorhergehenden Ansprüche, **dadurch gekennzeichnet, dass** die Codesequenz ein oder mehrere Sequenzen von Codes umfasst, welche Zeichencodes und/oder Fehlercodes repräsentieren.

6. Verfahren nach einem der vorhergehenden Ansprüche, **dadurch gekennzeichnet, dass** das eine oder mehrere Aussortierbeispiele aus Benutzerinteraktionen, die eine Benutzerakzeptanz der angewandten Codesequenz widerspiegeln, abgeleitet werden.

7. Verfahren nach einem der vorhergehenden Ansprüche, **dadurch gekennzeichnet, dass** das eine oder mehrere Aussortierbeispiele aus einer Codesequenzüberprüfung und/oder Testergebnissen von Codesequenztests abgeleitet werden.

8. Verfahren nach einem der vorhergehenden Ansprüche, **dadurch gekennzeichnet, dass** die Merkmale aus Artefakten des Softwareentwicklungsprojekts aus Verlinkungen von Daten aus Anforderungsbeschreibungen und/oder Architekturbeschreibung und/oder Quellcodedokumentation und/oder Testfallbeschreibungen und/oder Beschreibungen zum Ausrollen der aus der Softwareentwicklung resultierenden Anwendung zur Benutzung durch einen Benutzer extrahiert werden.

9. Technisches System (S) zum Durchführen des Verfahrens nach einem der vorhergehenden Ansprüche.

10. Computerprogrammprodukt mit Programmcodemitteln, welche eine elektronische Recheneinrichtung, insbesondere die Recheneinheit nach Anspruch 1, dazu veranlassen, ein Verfahren nach einem der vorhergehenden Verfahrensansprüchen durchzuführen, wenn die Programmcodemittel von der elektronischen Recheneinrichtung abgearbeitet werden.
